# EUROPEAN PATENT SPECIFICATION

(11) **EP 4 172 413 B1**
(45) Date of publication and mention of the grant of the patent: **04.09.2024**
(21) Application number: 21737698.7
(22) Date of filing: 23.06.2021
(51) Int. Cl.: D21H 17/14, C08L 5/00, D21H 17/23, D21H 17/24, D21H 17/00, D21H 21/16

(54) **AN AQUEOUS EMULSION AND METHOD FOR MAKING IT**
EINE WÄSSRIGE EMULSION UND VERFAHREN ZU IHRER HERSTELLUNG
ÉMULSION AQUEUSE ET MÉTHODE POUR SA FABRICATION

(30) Priority: 26.06.2020 FI 20205679
(43) Date of publication of application: 03.05.2023
(73) Proprietor: Kemira OYJ, Helsinki 00180 (FI)
(72) Inventor: HILTUNEN, Jaakko, 02270 Espoo (FI); LACKINGER-CSARMANN, Elisabeth, 3500 Krems (AT); STRENGELL, Reetta, 02270 Espoo (FI)
(74) Representative: Berggren Oy
(86) International application number: PCT/FI2021/050482
(87) International publication number: WO 2021/260273

(56) References cited:
- WO-A1-03/074787
- US-A1- 2004 206 274

## Description

The present invention relates to an aqueous emulsion, use of an anionic lignin-carbohydrate complex, and to a method for making an aqueous emulsion according to the preambles of the enclosed independent claims.

Paper, board or the like are sized in order to decrease or prevent the penetration of water and other liquids into its structure. In internal sizing chemical sizing agents are added to the furnish, where they interact with the fibres in order to increase the water repellency of the paper or board. Alternatively, or in addition, in surface sizing chemical sizing agents can be added on the surface of the partially dried paper, board or the like, in order to seal the surface and decrease the liquid penetration.

Hydrophobic anhydride-based sizing agents, such as alkenyl succinic anhydride, are commonly used in sizing of paper, board and the like. The anhydride-based sizing agents are homogenized with water to provide an aqueous oil-in-water emulsion which is then used in sizing. The aqueous sizing emulsions are usually stabilized by using stabilizing agents, most commonly starch. However, the temporal stability of the emulsions comprising anhydride-based sizing agents is not always fully satisfactory, which requires that the prepared emulsions must be used in the sizing process during a relatively short time after their preparation. Otherwise the hydrophobic size particles in the emulsion may coalesce, which causes deterioration of the emulsion properties.

Furthermore, use of starch as a stabilizing agent in sizing emulsions may cause an increased risk for bacterial growth and deposit problems in the manufacturing process of paper or board, as the starch provides nutrition for bacteria existing in the process. The document WO03/074787 A1 discloses a method of making a paper comprising the provision of an emulsion containing a sizing agent and an anionic starch as stabilizer.

In view of the above, there is a need for new effective stabilizer that can be used for stabilizing aqueous emulsions of hydrophobic anhydride-based sizing agents. Under the present strive for sustainability the stabilizer would preferably originate from renewable sources and would not be based on petrochemical products.

An object of this invention is to minimise or even eliminate the disadvantages existing in the prior art.

Another object of the present invention is also to provide an aqueous emulsion of a hydrophobic anhydride-based sizing agent that is stable and easy to make.

A further object of this invention is to provide a new simple method for making an aqueous emulsion of a hydrophobic anhydride-based sizing agent.

These objects are attained with the invention having the characteristics presented below in the characterising parts of the independent claims. Some preferable embodiments are disclosed in the dependent claims.

The features recited in the dependent claims and the embodiments disclosed in the description are mutually freely combinable unless otherwise explicitly stated.

The exemplary embodiments presented in this text and their advantages relate by applicable parts to all aspects of the invention, even though this is not always separately mentioned.

Typical aqueous emulsion of a hydrophobic anhydride-based sizing agent according to the present invention is prepared by homogenizing the said anhydride-based sizing agent in an aqueous phase which comprises a stabilizer, which is an anionic lignin-carbohydrate complex, as defined in claim 1.

Typical use of an anionic lignin-carbohydrate complex according to the present invention is as a stabilizer for an aqueous emulsion of a hydrophobic anhydride-based sizing agent, as defined in claim 14.

Typical method according to the present invention for making an aqueous emulsion of a hydrophobic anhydride-based sizing agent is defined in claim 15, and comprises, inter alia,
- providing an aqueous phase comprising a stabilizer, which is an anionic lignin-carbohydrate complex,
- mixing a hydrophobic anhydride-based sizing agent to the aqueous phase to form a mixture, and
- homogenizing the mixture to form an aqueous emulsion

Now it has been surprisingly found out that the stability of an aqueous emulsion comprising a hydrophobic anhydride-based sizing agent is improved when an anionic lignin-carbohydrate complex, where the lignin and carbohydrate are covalently bound with each other, is used as a stabilizer. The scientific reason for the improvement is not yet presently fully understood. The obtained emulsion according to the present invention provides at least as good other properties, if not better, as the emulsions prepared by using conventional stabilizers, such as starch, and in addition an unexpected emulsion stability under a prolonged time. This means that the emulsions according to the present invention behave in practical sizing applications in a same way as the known emulsions and provide at least the same sizing effect. As the emulsion of the present invention show, however, a superior emulsion stability in comparison to known emulsions, it enables a more relaxed application schedule, e.g. at the time of process disturbances. Furthermore, the lignin-carbohydrate complex where the lignin and carbohydrate are covalently bound with each other is probably less palatable for the process bacteria, which might help in minimising the risk for bacterial overgrowth and formation of bacterial deposits in the manufacturing process of paper, board, or the like.

In the present context the hydrophobic anhydride-based sizing agent may be any anhydride-based substance typically used for sizing, preferably internal sizing, in the manufacture of paper, board or the like. Preferably, the hydrophobic anhydride-based sizing agent may be selected from a group consisting of alkenyl succinic anhydride, maleated vegetable oils, fatty acid anhydrides and any of their mixtures. Fatty acid anhydrides may be based on saturated or unsaturated fatty acids, or mixtures of saturated and/or unsaturated fatty acids. The chain length of the suitable fatty acid anhydrides may be >12 carbon atoms, preferably 12 - 24 carbon atoms. Suitable fatty acid anhydrides are, for example, oleic, linoleic, linolenic, arachidic, behenic and stearic acid anhydrides. Unsaturated fatty acid anhydrides comprising chain length of 18 carbon atoms, i.e. double bonds in their chain, are preferable. According to one embodiment fatty acid anhydrides selected from oleic, linoleic, linolenic acid anhydrides and their mixtures are preferable. According one embodiment the fatty acid anhydride may be derived from tall oil, sunflower oil, rapeseed oil, soybean oil, linseed oil or any of their mixtures.

According to one embodiment the hydrophobic anhydride-based sizing agent may comprise or be maleated vegetable oil, such as sunflower oil, rapeseed oil, safflower oil, olive oil, hazelnut oil, or any of their mixtures. Preferably the hydrophobic anhydride-based sizing agent may comprise or be maleated high oleic sunflower oil (MSOHO) or maleated rapeseed oil (MRSO), high oleic sunflower oil being especially preferable. Typical oleic acid contents of some suitable vegetable oils are as follows: high oleic sunflower oil 70 - 85 %, rapeseed oil 51 - 67 %, olive oil 58 - 83 % and hazelnut oil 77 - 84 %.

According to one especially preferable embodiment hydrophobic anhydride-based sizing agent comprises or is alkenyl succinic anhydride.

The anionic lignin-carbohydrate complex is a natural polymeric complex that comprises lignin and carbohydrate(s), preferably hemicellulose(s), covalently bound with each other. The lignin-carbohydrate complex is thus a conjugate of lignin and carbohydrate(s), which are irreversibly bound which each other to a common structure. The anionic lignin-carbohydrate complex may have a branched structure. For example, the lignin or the carbohydrate may form a backbone structure for the complex and the other component, either carbohydrate or lignin, may form pendant groups, which are covalently bound to the backbone structure.

The lignin-carbohydrate complex may be formed of lignin and one or more of carbohydrates, such as hemicelluloses. The carbohydrate(s) in the lignin-carbohydrate complex may preferably be formed from monosaccharides, such as mannose, galactose, glucose, xylose and/or arabinose, or their fragments or residues; or the carbohydrate(s) may be said monosaccharide(s) and/or their fragments or residues. The exact amount of the monosaccharides in the lignin-carbohydrate complex and their relative ratios depend on the wood species, e.g. hardwood/softwood, which has been used in the pulping process and from which lignin-carbohydrate complex originates. The monosaccharides may be present in the lignin-carbohydrate complex as sugar residues, covalently bound to the lignin.

The anionic lignin-carbohydrate complex may comprise various anionic functional groups, such as sulfonate groups, carboxyl groups and/or phenolic groups. The lignin-carbohydrate complex may comprise, for example, >1300 - 1700 µmol/g, preferably 1400 - 1600 µmol/g of sulfonate groups; 300 - 500 µmol/g, preferably 350 - 450 µmol/g of carboxyl groups; and/or 125 - 250 µmol/g, preferably 150 - 225 µmol/g of phenolic groups.

The lignin-carbohydrate complex, suitable for use in the present invention, may be obtained from a side stream of a pulping process. In one embodiment, a suitable lignin-carbohydrate complex may be obtained by enzymatic treatment of lignin-carbohydrate material originating from a pulping process. For example, the lignin-carbohydrate complex may be obtained by isolating lignin-carbohydrate material from side streams of wood pulping processes by filtration, such as membrane filtration, and by processing the said isolated lignin-carbohydrate material by enzymatic processing employing preferably laccase enzyme. Alternatively, lignin-carbohydrate complex may be isolated from lignocellulosic material, such as wood or pulp, by using separation and fractionation methods known as such. For example, it is possible to isolate lignin-carbohydrate complexes by fractionating lignin from an industrial process, such as kraft pulping or sulphite pulping. Suitable lignin fractionating methods include, for example, solvent fractionation or precipitation fractionation. In solvent fractionation various organic solvents and their binary mixtures may be employed, such as acetone-hexane, acetone-water, ethanol-water, propyleneglycol monomethyl ether-water. Such fractionation method is described, inter alia, in Int. J. Biol. Macromolecules 106 (2018) 979-987.

According to one preferable embodiment of the invention the anionic lignin-carbohydrate complex is an anionic lignosulfonate-carbohydrate complex. It can be obtained, for example, by membrane filtration of a pre-hydrolysis mixture from a sulphite pulping process of wood, and treated by an enzymatic oxidative treatment, preferably by a laccase enzyme. Preferably the filtered pre-hydrolysis mixture is obtained from a sulphite pulping process of wood. The pre-hydrolysis mixture may contain wood-based components and pulping chemicals. Suitable anionic lignosulfonate-carbohydrate complex is disclosed e.g. in BioResources 13(4), 7606 - 7627, 2018, and they are commercially available from Ecohelix AB, Sweden.

The anionic lignin-carbohydrate complex may have an anionic charge density less than -0.2 meq/g, preferably -0.5 meq/g, more preferably less than -0.85 meq/g, measured at pH 7. The anionic charge density of the complex may be from -0.2 meq/g to -2.5 meq/g, preferably from -0.5 meq/g to -2.4 meq/g, more preferably from -0.85 meq/g to -2.3 meq/g, measured at pH 7. Sometimes the anionic charge density of the complex may be from -0.5 meq/g to -1.75 meq/g, preferably from -0.85 to -1.5 meq/g, measured at pH 7. The anionic lignin-carbohydrate complex may even have an anionic charge density from -2.0 meq/g to -2.3 meq/g, preferably from -2.1 meq/g to -2.2 meq/g or to -2.15 meq/g, measured at pH 7. All charge density values are given as per dry substance, and measured by using a Mütek Particle Charge Detector.

The lignin-carbohydrate complex may have a weight average molecular weight >3500 g/mol, preferably >4000 g/mol, more preferably > 5000 g/mol. The lignin-carbohydrate complex may have the weight average molecular weight MW in a range of 3500 - 90 000 g/mol, preferably 4 000 - 80 000 g/mol, more preferably 5000 - 70 000 g/mol.

According to one preferable embodiment, the lignin-carbohydrate complex may preferably have relatively high molecular weight. It is assumed, without wishing to be bound by a theory that the high molecular weight provides at least some of the surprising effects that have been observed. The lignin-carbohydrate complex may have a weight average molecular weight MW >8000 g/mol, preferably >10 000 g/mol, more preferably >12 000 g/mol or >15 000 g/mol, sometimes even >20 000 g/mol or >25 000 g/mol. The lignin-carbohydrate complex may have the weight average molecular weight MW in a range of 8 000 - 50 000 g/mol or 10 000 - 45 000 g/mol, preferably 12 000 - 40 000 g/mol or 15 000 - 37 000 g/mol. Sometimes the lignin-carbohydrate complex may have the weight average molecular weight MW in a range of 20 000 - 45 000 g/mol, preferably 25 000 - 40 000 g/mol, more preferably 25 000 - 35 000 g/mol or 25 000 - 27 000 g/mol. It is also possible that the lignin-carbohydrate complex may have the weight average molecular weight MW in a range of 15 000 - 120 000 g/mol or 20 000 - 90 000 g/mol, preferably 25 000 - 80 000 g/mol, more preferably 30 000 - 70 000 g/mol.

The lignin-carbohydrate complex comprises lignin and carbohydrates, preferably hemicellulose, in a ratio from 90:10 to 10:90, preferably from 80:20 to 20:80, more preferably from 75:25 to 25:75 (lignin:carbohydrate). According to one embodiment of the invention the lignin-carbohydrate complex may comprise at least 10 weight-%, sometimes preferably at least 15 weight-% of carbohydrate(s), preferably hemicellulose(s), calculated from total dry weight of the complex. The lignin-carbohydrate complex may comprise carbohydrate(s) in a range of 10 - 40 weight-%, preferably 10 - 30 weight-% or 15 - 25 weight-%, calculated from total dry weight of the complex.

According to one embodiment of the invention, the aqueous emulsion comprises the lignin-carbohydrate complex and the hydrophobic anhydride-based sizing agent in a weight ratio from 0.05:1 to 0.5:1, preferably from 0.075:1 to 0.3:1, even more preferably from 0.1:1 to 0.25:1. It has been unexpectedly found out that even small amounts of lignin-carbohydrate complex provide valuable emulsion stabilisation effect in the prepared aqueous emulsions. In this manner it is possible to reduce the total amount of stabilizer, and still obtain desired emulsion stability without compromising other emulsion properties. The emulsion comprises 0.01 - 1 weight-%, preferably 0.05 - 0.7 weight-%, more preferably 0.07 - 0.5 weight-% or 0.07 - 0.3 weight-%, of lignin-carbohydrate complex, calculated from total weight of the emulsion.

The emulsion according to the present invention comprises 0.5 -10 weight-%, more preferably 0.5 - 5 weight-%, even more preferably 0.75 - 3.5 weight-%, of the said hydrophobic anhydride-based sizing agent, given as active agent and calculated from the total weight of the emulsion. The hydrophobic anhydride-based sizing agent, such as alkenyl succinic anhydride, which is dispersed in the aqueous continuous phase of the emulsion, may have a particle size D95 in a range of 0.5 - 10 µm, preferably 0.75 - 5 µm, more preferably 1 - 3 µm. In general, the emulsion according to present invention shows size particles which have suitable small particle size for use as a sizing agent in paper and board making applications.

According to one preferable embodiment the aqueous emulsion of the hydrophobic anhydride-based sizing agent is free of starch. Furthermore, the aqueous emulsion is free of other synthetic polymers than the anhydride-based sizing agent. The aqueous emulsion preferably does not contain other solvents than water, i.e. the solvent forming the continuous phase of the emulsion is preferably solely water.

The obtained aqueous emulsion is stable at least 30 minutes, preferably at least 1 hour or at least 2 hours, measured as a change of the particle size D95 as a function of time, wherein the particle size D95 changes less than 10% within the defined time period. This means that the particle size D95 value for the emulsion is measured directly after the preparation of the emulsion and a first D95 value is obtained. After the emulsion is allowed to stand a defined time period, e.g. 30 minutes, preferably 1 hour or 2 hours, the particle size D95 value is measured anew and a second D95 value is obtained. The emulsion is considered stable, when the difference between the first D95 value and the second D95 value is less than 10%, preferably less than 7.5%, more preferably less than 5%.

The pH of the prepared emulsion may be ≤6.5, preferably ≤6, more preferably ≤5. The pH may be, for example, in a range from 2 to 6.5 or from 3 to 6. It has been observed that the stability of the emulsion is further improved when the pH of the emulsion is slightly acidic. The pH of the emulsion may be adjusted to desired level by using conventionally accepted methods, e.g. by addition of a suitable acid. It is possible to adjust the pH of the aqueous phase of the emulsion or the pH of the formed emulsion to the desired pH value.

According to one embodiment of the invention the aqueous emulsion may contain, in addition to the lignin-carbohydrate complex, also other additives, such as emulsifiers, e.g. dioctyl sodium sulfosuccinate. Typically, any other additive originates from the anhydride-based sizing agent. The amount of any other additive in the emulsion is usually small, typically < 1 weight-%, more typically < 0.1 weight-%, even more typically < 0.01 weight-%, calculated from the total weight of the emulsion.

The aqueous emulsion of hydrophobic anhydride-based sizing agent can be prepared simply by mixing the individual components of the emulsion. It is possible to first prepare an aqueous phase comprising the stabilizer, which is an anionic lignin-carbohydrate complex, for example by mixing the stabilizer into water. After that the hydrophobic anhydride-based sizing agent can be mixed to the aqueous phase, and the mixture can be homogenized to form a stable aqueous oil-in-water emulsion. Any suitable high-shear mixing device, which are known as such, can be used for mixing and homogenisation.

The temperature of the aqueous phase during the preparation of the aqueous emulsion may be in a range of 5 - 90 °C, preferably 15 - 70 °C. According to one embodiment the aqueous phase may be heated to a temperature of at least 40 °C before the stabilizer is added to the aqueous phase.

According to one preferable embodiment of the invention the anionic lignin-carbohydrate complex is added to the aqueous phase as a diluted aqueous solution, where the final concentration of the lignin-carbohydrate complex may be <0.6 weight-% or <0.5 weight-%, preferably <0.3 weight-% or <0.25 weight-%, more preferably <0.2 weight-%, sometimes even <0.15 weight-%, calculated from total weight of the emulsion. In some embodiments the anionic lignin-carbohydrate complex is added to the aqueous phase as an diluted aqueous solution, where the final concentration of the lignin-carbohydrate complex may be 0.05 - 0.5 weight-% or 0.05 - 0.6 weight-%, preferably 0.075 - 0.3 weight-% or 0.075 - 0.25 weight-%, more preferably 0.08 - 0.2 weight-%, sometimes 0.9 - 0.15 weight-%, calculated from total weight of the emulsion.

It has been observed that the aqueous emulsion of a hydrophobic anhydride-based sizing agent prepared according to the present invention provides similar sizing performance in the paper and board making as the sizing agents prepared in a conventional manner. It is possible that the sizing agent prepared according to the present invention shows even better sizing performance in the paper and board making.

### EXPERIMENTAL

### Example 1

An anionic lignin-carbohydrate complex (Ecohelix AB, Sweden) was tested as stabilizer for commercial alkenyl succinic anhydride (FennoSize AS 3100, Kemira Oyj). The anionic lignin-carbohydrate complex was tested at different concentrations: 0.5 weight-% (sample series A), 0.25 weight-% (sample series B) 0.15 weight-% (sample series C). These are the aqueous phase concentrations in the final emulsion. The emulsification was done by using an Ultra Turrax mixing device, mixing time 1 min, speed 10 000 rpm.

The particle size distribution of the obtained emulsion was measured by using laser diffraction particle size distribution analyser (Horiba LA-300). The measurements were made immediately after the emulsification and after the emulsion had stood 30 min.

Emulsification of same commercial alkenyl succinic anhydride to water, final concentration in emulsion 1 weight-%, without any added stabilizer, was used as a reference.

The results are shown in Table 1.

**Table 1 Results of Example 1**

| Sample | Ratio complex:ASA | Particle size at 0 min [µm] | | | Particle size at 30 min [µm] | | |
|---|---|---|---|---|---|---|---|
| | | D50 | D90 | D95 | D50 | D90 | D95 |
| A1 | 0.2:1 | 1.4 | 3.3 | 4.5 | 1.6 | 34.2 | 49.0 |
| A2 | 0.1:1 | 1.5 | 3.9 | 5.6 | 2.0 | 30.4 | 54.3 |
| A3 | 0.05:1 | 1.7 | 5.1 | 7.2 | 1.8 | 7.7 | 13.6 |
| B1 | 0.2:1 | 0.9 | 1.4 | 1.7 | 0.8 | 1.4 | 1.7 |
| B2 | 0.1:1 | 1.1 | 2.0 | 2.4 | 1.1 | 2.3 | 2.9 |
| B3 | 0.05:1 | 1.2 | 2.5 | 3.2 | 1.3 | 3.5 | 4.8 |
| C1 | 0.2:1 | 0.6 | 0.8 | 0.9 | 0.6 | 0.9 | 0.9 |
| C2 | 0.1:1 | 0.8 | 1.1 | 1.3 | 0.8 | 1.1 | 1.3 |
| C3 | 0.05:1 | 1.0 | 1.9 | 2.4 | 1.1 | 2.1 | 2.7 |
| Reference | - | 1.1 | 2.1 | 2.6 | 1.1 | 3.0 | 5.4 |

It is seen from Table 1 that good particle size distribution and stable emulsion can be obtained with 0.25 weight-% of the anionic lignin-carbohydrate complex is used as stabilizer. Even better results, for both the particle size distribution and stability, can be obtained when the anionic lignin-carbohydrate complex is used in amount of 0.15 weight-% in the final emulsion.

### Example 2

The anionic lignin-carbohydrate complex (Ecohelix AB, Sweden) is the same as in Example 1 and it was tested as stabilizer for three commercial alkenyl succinic anhydrides ASA1 (FennoSize AS 3100, Kemira Oyj), ASA2 (FennoSize AS 1000, Kemira Oyj) and ASA3 (FennoSize MO 30, Kemira Oyj). Alkenyl succinic anhydride ASA3 contained maleated sunflower oil. The anionic lignin-carbohydrate complex was in form of a solution, having solids content of 27 weight-%, pH 5.5.

The anionic lignin-carbohydrate complex was tested at different concentrations: 0.25 weight-% and 0.5 weight-%. These are the concentrations in the final emulsion. The emulsification was done by using a Cavitron emulsifier device.

The particle size distribution of the obtained emulsion was measured by using laser diffraction particle size distribution analyser (Horiba LA-300). The measurements were made immediately after the emulsification and after the emulsion had stood 30 min.

The used amounts and results are shown in Table 2.

**Table 2 Results of Example 2.**

| Size | Complex concentration, final [w-%] | Ratio complex:ASA | Particle size at 0 min [µm] | | | Particle size at 30 min [µm] | | |
|---|---|---|---|---|---|---|---|---|
| | | | D50 | D90 | D95 | D50 | D90 | D95 |
| ASA1 | 0.5 | 0.3:1 | 1.8 | 3.5 | 4.3 | 2.0 | 3.8 | 4.6 |
| ASA1 | 0.5 | 0.2:1 | 1.5 | 3.0 | 3.8 | 1.7 | 3.0 | 3.6 |
| ASA1 | 0.5 | 0.1:1 | 1.4 | 2.5 | 3.1 | 1.4 | 2.5 | 2.9 |
| ASA1 | 0.25 | 0.2:1 | 1.5 | 2.5 | 2.9 | 1.6 | 2.7 | 3.3 |
| ASA1 | 0.25 | 0.1:1 | 1.3 | 2.3 | 2.6 | 1.4 | 2.5 | 3.0 |
| ASA2 | 0.25 | 0.1:1 | 1.9 | 3.3 | 3.8 | 1.8 | 3.4 | 4.2 |
| ASA3 | 0.25 | 0.1:1 | 1.5 | 2.9 | 3.5 | 1.4 | 2.8 | 3.5 |

It is seen from Table 2 that that good particle size distribution and stable emulsion can be obtained with 0.25 weight-% of the anionic lignin-carbohydrate complex is used as stabilizer.

The project leading to this application has received funding from the Bio Based Industries Joint Undertaking (JU) under grant agreement No 837866. The JU receives support from the European Union's Horizon 2020 research and innovation programme and the Bio Based Industries Consortium.

## Claims

1. An aqueous emulsion of a hydrophobic anhydride-based sizing agent, prepared by homogenizing the said anhydride-based sizing agent in an aqueous phase which comprises a stabilizer, which is an anionic lignin-carbohydrate complex, where lignin and carbohydrate are covalently bound with each other and which has a lignin:carbohydrate ratio from 90:10 to 10:90, wherein the emulsion comprises
- 0.5 - 10 weight-% of the said hydrophobic anhydride-based sizing agent, given as active agent and calculated from the total weight of the emulsion, and
- 0.01 - 1 weight-% of lignin-carbohydrate complex, calculated from total weight of the emulsion.

2. Emulsion according to claim 1, **characterised in that** the hydrophobic anhydride-based sizing agent is selected from a group consisting of alkenyl succinic anhydride, maleated vegetable oils and fatty acid anhydrides.

3. Emulsion according to claim 1 or 2, **characterised in that** the anionic lignin-carbohydrate complex comprises anionic functional groups selected from sulfonate groups, carboxyl groups and/or phenolic groups.

4. Emulsion according to claims 1, 2 and 3, **characterised in that** the lignin-carbohydrate complex has a weight average molecular weight MW in a range of 3500 - 90 000 g/mol, preferably 4 000 - 80 000 g/mol, more preferably 5000 - 70 000 g/mol, and/or an anionic charge density less than -0.2 meq/g, preferably - 0.5 meq/g, more preferably less than-0.85 meq/g, measured at pH 7.

5. Emulsion according to any of preceding claims 1 - 4, **characterised in that** the lignin-carbohydrate complex comprises at least 10 weight-%, preferably at least 15 weight-% of carbohydrates, calculated from total dry weight of the complex.

6. Emulsion according to any of preceding claims 1 - 5, **characterised in that** the lignin-carbohydrate complex has the lignin:carbohydrate ratio from 80:20 to 20:80, preferably from 75:25 to 25:75.

7. Emulsion according to any of preceding claims 1 - 6, **characterised in that** the lignin-carbohydrate complex comprises galactose, glucose, mannose, arabinose and/or xylose residues, which are covalently bound to a lignin backbone.

8. Emulsion according to any of preceding claims 1 - 7, **characterised in that** it comprises the lignin-carbohydrate complex and said hydrophobic anhydride-based sizing agent in a weight ratio from 0.05:1 to 0.5:1, preferably from 0.075:1 to 0.3:1, even more preferably from 0.1:1 to 0.25:1.

9. Emulsion according to any of preceding claims 1 - 8, **characterised in that** the lignin-carbohydrate complex is obtained by enzymatic treatment of lignin-carbohydrate material originating from a pulping process.

10. Emulsion according to any of preceding claims 1 - 9, **characterised in that** the anhydride-based sizing agent, preferably alkenyl succinic anhydride, dispersed in the aqueous phase of the emulsion, has a particle size D95 in a range of 0.5 - 10 µm, preferably 0.75 - 5 µm, more preferably 1 - 3 µm.

11. Emulsion according to any of preceding claims 1 - 10, **characterised in that** the emulsion comprises 0.5 - 5 weight-%, preferably 0.75 - 3.5 weight-%, of the said hydrophobic anhydride-based sizing agent, given as active agent and calculated from the total weight of the emulsion.

12. Emulsion according to any of preceding claims 1 - 11, **characterised in that** the emulsion comprises 0.05 - 0.7 weight-%, preferably 0.07 - 0.5 weight-% or 0.07 - 0.3 weight-%, of lignin-carbohydrate complex, calculated from total weight of the emulsion.

13. Emulsion according to any of preceding claims 1 - 12, **characterised in that** the emulsion is stable at least 30 minutes, preferably at least 1 hour, measured as a change of the particle size D95 as a function of time, wherein the particle size D95 changes less than 10% within the defined time period.

14. Use of an anionic lignin-carbohydrate complex, where lignin and carbohydrate are covalently bound with each other and which has a lignin:carbohydrate ratio from 90:10 to 10:90, as a stabilizer for an aqueous emulsion of a hydrophobic anhydride-based sizing agent.

15. Method for making an aqueous emulsion of a hydrophobic anhydride-based sizing agent, which method comprises
- providing an aqueous phase comprising a stabilizer, which is an anionic lignin-carbohydrate complex, where lignin and carbohydrate are covalently bound with each other and which has a lignin:carbohydrate ratio from 90:10 to 10:90,
- mixing a hydrophobic anhydride-based sizing agent to the aqueous phase to form a mixture, and
- homogenizing the mixture to form an aqueous emulsion comprising 0.5 - 10 weight-% of the said hydrophobic anhydride-based sizing agent, given as active agent and calculated from the total weight of the emulsion, and 0.01 - 1 weight-% of lignin-carbohydrate complex, calculated from total weight of the emulsion.

## Patentansprüche

1. Wässrige Emulsion eines hydrophoben Anhydrid-basierten Leimungsmittels, die durch das Homogenisieren des Anhydrid-basierten Leimungsmittels in einer wässrigen Phase hergestellt wird, die einen Stabilisator umfasst, bei dem es sich um einen anionischen Lignin-Kohlenhydrat-Komplex handelt, bei dem Lignin und ein Kohlenhydrat kovalent aneinander gebunden sind und der ein Lignin:Kohlenhydrat-Verhältnis von 90:10 bis 10:90 aufweist, wobei die Emulsion Folgendes umfasst:
- 0,5 - 10 Gew.-% des hydrophoben Anhydrid-basierten Leimungsmittels, das als aktives Mittel zugegeben und aus dem Gesamtgewicht der Emulsion berechnet wird, und
- 0,01 - 1 Gew.-% eines Lignin-Kohlenhydrat-Komplexes, der aus dem Gesamtgewicht der Emulsion berechnet wird.

2. Emulsion nach Anspruch 1, **dadurch gekennzeichnet, dass** das hydrophobe Anhydrid-basierte Leimungsmittel aus einer Gruppe ausgewählt ist, die aus Alkenylbernsteinsäureanhydrid, maleierten pflanzlichen Ölen und Fettsäureanhydriden besteht.

3. Emulsion nach Anspruch 1 oder 2, **dadurch gekennzeichnet, dass** der anionische Lignin-Kohlenhydrat-Komplex anionische funktionelle Gruppen umfasst, die aus Sulfonatgruppen, Carboxylgruppen und/oder phenolischen Gruppen ausgewählt sind.

4. Emulsion nach den Ansprüchen 1, 2 und 3, **dadurch gekennzeichnet, dass** der Lignin-Kohlenhydrat-Komplex ein Massenmittel der Molmasse MW in einem Bereich von 3500 - 90 000 g/mol, vorzugsweise 4000 - 80 000 g/mol, stärker bevorzugt 5000 - 70 000 g/mol., und/oder eine anionische Ladungsdichte von weniger als -0,2 mVal/g, vorzugsweise -0,5 mVal/g, stärker bevorzugt weniger als -0,85 mVal/g, gemessen bei einem pH-Wert von 7, aufweist.

5. Emulsion nach einem der vorhergehenden Ansprüche 1 - 4, **dadurch gekennzeichnet, dass** der Lignin-Kohlenhydrat-Komplex mindestens 10 Gew.-%, vorzugsweise mindestens 15 Gew.-% Kohlenhydrate umfasst, berechnet aus dem Gesamttrockengewicht des Komplexes.

6. Emulsion nach einem der vorhergehenden Ansprüche 1 - 5, **dadurch gekennzeichnet, dass** der Lignin-Kohlenhydrat-Komplex ein Lignin:Kohlenhydrat-Verhältnis von 80:20 bis 20:80, vorzugsweise von 75:25 bis 25:75, aufweist.

7. Emulsion nach einem der vorhergehenden Ansprüche 1 - 6, **dadurch gekennzeichnet, dass** der Lignin-Kohlenhydrat-Komplex Galactose-, Glucose-, Mannose-, Arabinose- und/oder Xylosereste umfasst, die an einem Lignin-Rückgrat kovalent gebunden sind.

8. Emulsion nach einem der vorhergehenden Ansprüche 1 - 7, **dadurch gekennzeichnet, dass** sie den Lignin-Kohlenhydrat-Komplex und das hydrophobe Anhydrid-basierte Leimungsmittel in einem Gewichtsverhältnis von 0,05:1 bis 0,5:1, vorzugsweise von 0,075:1 bis 0,3:1, sogar noch stärker bevorzugt von 0,1:1 bis 0,25:1, umfasst.

9. Emulsion nach einem der vorhergehenden Ansprüche 1 - 8, **dadurch gekennzeichnet, dass** der Lignin-Kohlenhydrat-Komplex durch eine enzymatische Behandlung eines Lignin-Kohlenhydrat-Materials erhalten wird, das von einem Papieraufschlussverfahren stammt.

10. Emulsion nach einem der vorhergehenden Ansprüche 1 - 9, **dadurch gekennzeichnet, dass** das Anhydrid-basierte Leimungsmittel, vorzugsweise ein Alkenylbernsteinsäureanhydrid, das in der wässrigen Phase der Emulsion dispergiert ist, eine Partikelgröße D95 in einem Bereich von 0,5 - 10 pm, vorzugsweise 0,75 - 5 pm, stärker bevorzugt 1 - 3 pm, aufweist.

11. Emulsion nach einem der vorhergehenden Ansprüche 1 - 10, **dadurch gekennzeichnet, dass** die Emulsion 0,5 - 5 Gew.-%, vorzugsweise 0,75 - 3,5 Gew.-%, des hydrophoben Anhydrid-basierten Leimungsmittels umfasst, das als aktives Mittel zugegeben und aus dem Gesamtgewicht der Emulsion berechnet wird.

12. Emulsion nach einem der vorhergehenden Ansprüche 1 - 11, **dadurch gekennzeichnet, dass** die Emulsion 0,05 - 0,7 Gew.-%, vorzugsweise 0,07 - 0,5 Gew.-% oder 0,07 - 0,3 Gew.-%, des Lignin-Kohlenhydrat-Komplexes umfasst, der aus dem Gesamtgewicht der Emulsion berechnet wird.

13. Emulsion nach einem der vorhergehenden Ansprüche 1 - 12, **dadurch gekennzeichnet, dass** die Emulsion für mindestens 30 Minuten, vorzugsweise mindestens 1 Stunde, stabil ist, gemessen als Änderung der Partikelgröße D95 in Abhängigkeit von der Zeit, wobei sich die Partikelgröße D95 innerhalb des definierten Zeitraums um weniger als 10 % ändert.

14. Verwendung eines anionischen Lignin-Kohlenhydrat-Komplexes, wobei Lignin und ein Kohlenhydrat kovalent aneinander gebunden sind und der ein Lignin:Kohlenhydrat-Verhältnis von 90:10 bis 10:90 aufweist, als Stabilisator für eine wässrige Emulsion eines hydrophoben Anhydrid-basierten Leimungsmittels.

15. Verfahren zur Herstellung einer wässrigen Emulsion eines hydrophoben Anhydrid-basierten Leimungsmittels, wobei das Verfahren Folgendes umfasst:
- das Bereitstellen einer wässrigen Phase, die einen Stabilisator umfasst, bei dem es sich um einen anionischen Lignin-Kohlenhydrat-Komplex handelt, wobei Lignin und ein Kohlenhydrat kovalent aneinander gebunden sind und der ein Lignin: Kohlenhydrat-Verhältnis von 90:10 bis 10:90 aufweist,
- das Einmischen eines hydrophoben Anhydrid-basierten Leimungsmittels in die wässrige Phase, wodurch eine Mischung gebildet wird, und
- das Homogenisieren der Mischung, wodurch eine wässrige Emulsion gebildet wird, die 0,5 - 10 Gew.-% des hydrophoben Anhydrid-basierten Leimungsmittels, das als aktives Mittel zugegeben und aus dem Gesamtgewicht der Emulsion berechnet wird, und 0,01 - 1 Gew.-% eines Lignin-Kohlenhydrat-Komplexes umfasst, der aus dem Gesamtgewicht der Emulsion berechnet wird.

## Revendications

1. Émulsion aqueuse d'un agent d'encollage à base d'anhydride hydrophobe, préparée par homogénéisation dudit agent d'encollage à base d'anhydride dans une phase aqueuse qui comprend un stabilisant, qui est un complexe de lignine anionique-glucide, où la lignine et le glucide sont liés de manière covalente l'un à l'autre et qui peut posséder un rapport de lignine : glucide de 90 : 10 à 10 : 90, l'émulsion comprenant
- 0,5 à 10 % en poids dudit agent d'encollage à base d'anhydride hydrophobe, donné comme agent actif et calculé à partir du poids total de l'émulsion, et
- 0,01 à 1 % en poids de complexe lignine-glucide, calculé à partir du poids total de l'émulsion.

2. Émulsion selon la revendication 1, **caractérisée en ce que** l'agent d'encollage à base d'anhydride hydrophobe est choisi dans le groupe constitué par un anhydride alcénylsuccinique, des huiles végétales maléatées et des anhydrides d'acides gras.

3. Émulsion selon la revendication 1 ou 2, **caractérisée en ce que** le complexe de lignine anionique-glucide comprend des groupes fonctionnels anioniques choisis parmi des groupes sulfonate, des groupes carboxyle et/ou des groupes phénoliques.

4. Émulsion selon les revendications 1, 2 et 3, **caractérisée en ce que** le complexe de lignine-glucide possède un poids moléculaire moyen en poids MW dans une plage de 3 500 à 90 000 g/mole, préférablement 4 000 à 80 000 g/mole, plus préférablement 5 000 à 70 000 g/mole, et/ou une densité de charge anionique inférieure à -0,2 méq/g, préférablement -0,5 méq/g, plus préférablement inférieure à -0,85 méq/g, mesurée à pH 7.

5. Émulsion selon l'une quelconque des revendications précédentes 1 à 4, **caractérisée en ce que** le complexe de lignine-glucide comprend au moins 10 % en poids, préférablement au moins 15 % en poids de glucides, calculé sur un poids sec total du complexe.

6. Émulsion selon l'une quelconque des revendications précédentes 1 à 5, **caractérisée en ce que** le complexe lignine-glucide possède le rapport lignine : glucide de 80 : 20 à 20 : 80, préférablement de 75 : 25 à 25 : 75.

7. Émulsion selon l'une quelconque des revendications précédentes 1 à 6, **caractérisée en ce que** le complexe lignine-glucide comprend des radicaux galactose, glucose, mannose, arabinose et/ou xylose, qui sont liés de manière covalente à un squelette de lignine.

8. Émulsion selon l'une quelconque des revendications précédentes 1 à 7, **caractérisée en ce qu'**elle comprend le complexe de lignine-glucide et ledit agent d'encollage à base d'anhydride hydrophobe en un rapport en poids de 0,05 : 1 à 0,5 : 1, préférablement de 0,075 : 1 à 0,3 : 1, encore plus préférablement de 0,1 : 1 à 0,25 : 1.

9. Émulsion selon l'une quelconque des revendications précédentes 1 à 8, **caractérisée en ce que** le complexe de lignine-glucide est obtenu par traitement enzymatique d'une matière de lignine-glucide provenant d'un processus de réduction de pâte.

10. Émulsion selon l'une quelconque des revendications précédentes 1 à 9, **caractérisée en ce que** l'agent d'encollage à base d'anhydride, préférablement un anhydride alcénylsuccinique, dispersé dans la phase aqueuse de l'émulsion, possède une taille de particule D95 dans une plage de 0,5 à 10 pm, préférablement, 0,75 à 5 pm, plus préférablement 1 à 3 µm.

11. Émulsion selon l'une quelconque des revendications précédentes 1 à 10, **caractérisée en ce que** l'émulsion comprend 0,5 à 5 % en poids, préférablement 0,75 à 3,5 % en poids, dudit agent d'encollage à base d'anhydride hydrophobe, donné comme agent actif et calculé à partir du poids total de l'émulsion.

12. Émulsion selon l'une quelconque des revendications précédentes 1 à 11, **caractérisée en ce que** l'émulsion comprend 0,05 à 0,7 % en poids, préférablement 0,07 à 0,5 % en poids ou 0,07 à 0,3 % en poids, de complexe lignine-glucide, calculé à partir du poids total de l'émulsion.

13. Émulsion selon l'une quelconque des revendications précédentes 1 à 12, **caractérisée en ce que** l'émulsion est stable au moins 30 minutes, préférablement au moins 1 heure, mesurée comme un changement de la taille de particule D95 en fonction du temps, la taille de particule D95 changeant de moins de 10 % pendant la période de temps définie.

14. Utilisation d'un complexe de lignine anionique-glucide, où la lignine et le glucide sont liés de manière covalente l'un à l'autre et qui possède un rapport de lignine : glucide de 90 : 10 à 10 : 90, en tant que stabilisant pour une émulsion aqueuse d'un agent d'encollage à base d'anhydride hydrophobe.

15. Procédé pour la préparation d'une émulsion aqueuse d'un agent d'encollage à base d'anhydride hydrophobe, lequel procédé comprend
- la fourniture d'une phase aqueuse comprenant un stabilisant, qui est un complexe de lignine anionique-glucide, où la lignine et le glucide sont liés de manière covalente l'un à l'autre et qui possède un rapport de lignine : glucide de 90 : 10 à 10 : 90,
- le mélange d'un agent d'encollage à base d'anhydride hydrophobe avec la phase aqueuse pour former un mélange, et
- l'homogénéisation du mélange pour former une émulsion aqueuse comprenant 0,5 à 10 % en poids dudit agent d'encollage à base d'anhydride hydrophobe, donné comme agent actif et calculé à partir du poids total de l'émulsion, et 0,01 à 1 % en poids d'un complexe de lignine-glucide, calculé à partir du poids total de l'émulsion.
